# EUROPÄISCHE PATENTSCHRIFT

(11) **EP 3 193 012 B1**
(45) Veröffentlichungstag und Bekanntmachung des Hinweises auf die Patenterteilung: **29.04.2020**
(21) Anmeldenummer: 17156896.7
(22) Anmeldetag: 30.12.2009
(51) Int. Cl.: F03D 7/04, F03D 17/00, F03D 80/50

(54) **ANORDNUNG ZUM ÜBERWACHEN EINER WINDFARM**
ASSEMBLY FOR MONITORING A WIND FARM
AGENCEMENT DESTINÉ À LA SURVEILLANCE D'UN PARC ÉOLIEN

(30) Priorität: 12.01.2009 DE 102009004385
(43) Veröffentlichungstag der Anmeldung: 19.07.2017
(62) Teilanmeldung aus: 09016123.3
(73) Patentinhaber: Senvion GmbH, 22297 Hamburg (DE)
(72) Erfinder: Altemark, Jens, 24768 Rendsburg (DE)
(74) Vertreter: Glawe, Delfs, Moll

(56) Entgegenhaltungen:
- EP-A1- 1 531 376
- EP-A2- 1 783 365
- DE-A1-102007 027 849

## Beschreibung

Beschrieben ist eine Anordnung zum Überwachen des Betriebs einer Mehrzahl von Windenergieanlagen. Dabei werden Zustandsdaten der Windenergieanlage aufgenommen und es werden Abweichungen zwischen den Zustandsdaten und einem zugehörigen Vergleichswert festgestellt. Die Erfindung betrifft eine Anordnung zum Durchführen des Verfahrens. Die Anordnung umfasst eine Mehrzahl von Windenergieanlagen, eine Überwachungszentrale, ein Rechenmodul, ein Logikmodul und einen Kalkulator. Die Windenergieanlagen weisen einen Sensor auf, der dazu ausgelegt ist, Zustandsdaten der Windenergieanlagen aufzunehmen. Das Logikmodul ermittelt Abweichungen zwischen den Zustandsdaten der Windenergieanlage und einem zugehörigen Vergleichswert.

Aus der DE 10 2007 027849 A1 ist ein Verfahren zum Betreiben einer Windenergieanlage bekannt, bei dem Zustandsdaten erfasst und mit einem Referenzwert verglichen werden, wobei bei Vorliegen einer bestimmten Abweichung ein Warnsignal erzeugt wird. Weiterhin ist aus der EP 1 531 376 A1 ein Überwachungs- und Wartungssystem für eine Windenergieanlage bekannt, welches zur Erfassung von Sensordaten ausgebildet ist, um anhand der Sensordaten frühzeitig Fehler in systemkritischen Komponenten zu erkennen und ein Alarmsignal zu erzeugen.

Bislang wird in jeder einzelnen Windenergieanlage überwacht, ob diese ordnungsgemäß arbeitet, ob also alle Zustandsdaten im vorgeschriebenen Bereich liegen. Wird eine Abweichung vom ordnungsgemäßen Betrieb festgestellt, so wird eine Störmeldung erstellt und an eine Überwachungszentrale gesendet. In der Überwachungszentrale werden die Störmeldungen analysiert und es wird festgelegt, welche Reparaturmaßnahmen bei der betreffenden Windenergieanlage durchzuführen sind. Die Störmeldungen werden in der Reihenfolge ihres zeitlichen Eingangs bearbeitet.

Insbesondere bei großen Offshore-Windparks führt diese Bearbeitung von Störmeldungen zu unerwünschten Effekten. Windenergieanlagen müssen bekanntlich nach vorgegebener Betriebsdauer einer regelmäßigen Wartung unterzogen werden. Bei Offshore-Windparks ist die regelmäßige Wartung mit einigem Aufwand verbunden, weil das Wartungspersonal und die erforderlichen Werkzeuge per Schiff zu den Windenergieanlagen gebracht werden müssen. Wirtschaftlich sinnvoll ist es deswegen, die Wartung bei so vielen Windenergieanlagen wie möglich gleichzeitig durchzuführen. Auch wenn, wie es bei Offshore-Windparks üblich ist, alle Windenergieanlagen gleichzeitig in Betrieb genommen wurden, ist die Wartung nicht zwingend zum gleichen Zeitpunkt fällig. Der Zeitpunkt der Wartung bestimmt sich nämlich nicht in erster Linie daran, dass eine bestimmte Zeitdauer verstrichen ist, sondern daran, dass eine bestimmte Menge an elektrischer Energie produziert wurde. Insbesondere wegen unterschiedlich langer Ausfallzeiten oder Windbedingungen kann die bis zu einem bestimmten Zeitpunkt produzierte elektrische Energie von Windenergieanlage zu Windenergieanlage stark variieren. Dies kann dazu führen, dass bei einer Windenergieanlage die regelmäßige Wartung bereits fällig ist, während bei einer anderen Windenergieanlage erst 95% der elektrischen Energie dieses Wartungsintervalls produziert wurden. Wird trotzdem auch bei dieser Windenergieanlage bereits jetzt eine Wartung durchgeführt, wird ein Teil des Wartungsintervalls verschenkt. Wird hingegen die Wartung dieser Windenergieanlage später durchgeführt, so ist beim nachfolgenden Wartungsintervall erst recht nicht mehr damit zu rechnen, dass eine gleichzeitige Wartung möglich ist. Erstrebenswert ist vor diesem Hintergrund, dass die Wartung möglichst bei allen Windenergieanlagen des Windparks gleichzeitig fällig wird.

Der Erfindung liegt die Aufgabe zu Grunde, eine Anordnung zum Überwachen des Betriebs einer Mehrzahl von Windenergieanlagen vorzustellen, mit der ein möglichst gleichmäßiger Betrieb von Windenergieanlagen erreicht wird. Ausgehend vom eingangs genannten Stand der Technik wird die Aufgabe gelöst durch die Merkmale des unabhängigen Anspruchs 1. Vorteilhafte Ausführungsformen finden sich in den Unteransprüchen.

Bei der Anordnung wird anhand einer festgestellten Abweichung zwischen den Zustandsdaten und dem zugehörigen Vergleichswert eine Ausfallwahrscheinlichkeit der Windenergieanlage ermittelt. Ferner wird aus dem Verhältnis von tatsächlich erzeugter elektrischer Energiemenge zu potentiell erzeugbarer Gesamtmenge ein Verfügbarkeitswert ermittelt. Der Verfügbarkeitswert und die Ausfallwahrscheinlichkeit werden zu einer Reparaturpriorität zusammengeführt und die Reparaturpriorität wird der Windenergieanlage zugeordnet. Zunächst werden einige Begriffe erläutert. Die Ausfallwahrscheinlichkeit liegt in einem Grenzfall bei 100%. Dies ist der Fall, wenn die Windenergieanlage aufgrund des festgestellten Fehlers bereits automatisch außer Betrieb gesetzt wurde. Ist hingegen die Windenergieanlage in Betrieb und entsprechen alle Zustandsdaten den Sollwerten, so hat die Ausfallwahrscheinlichkeit einen kleinen Wert von beispielsweise 0%. Bei einer Abweichung zwischen den Zustandsdaten und dem zugehörigen Vergleichswert, die kein sofortiges Abschalten der Windenergieanlage zur Folge hat, kann der Windenergieanlage ein zwischen 0% und 100% liegender Wert für die Ausfallwahrscheinlichkeit zugeordnet werden. Sind für die Ausfallwahrscheinlichkeit keine Werte zwischen 0% und 100% vorgesehen, so entspricht die Ausfallwahrscheinlichkeit einem Kriterium, ob die Windenergieanlage betriebsbereit ist oder nicht. Um der Ausfallwahrscheinlichkeit Werte zwischen 0% und 100% zuzuordnen, müssen zusätzliche Informationen und Erfahrungswerte herangezogen werden. So kann beispielsweise aus früheren Beobachtungen bekannt sein, dass eine um 10°C erhöhte Temperatur des Getriebeöls mit einer Wahrscheinlichkeit von 30% innerhalb von drei Monaten und mit einer Wahrscheinlichkeit von 50% innerhalb von sechs Monaten zum Ausfall der Windenergieanlage führt. Hingegen kann beispielsweise eine um 10°C erhöhte Temperatur des Umrichters nur mit einer Wahrscheinlichkeit von 10% einen Ausfall innerhalb der nächsten sechs Monate zur Folge haben. Entsprechende Daten, die zur Bestimmung der Ausfallwahrscheinlichkeit erforderlich sind, werden in Condition-Monitoring-Systemen ermittelt und liegen den Herstellern von Windenergieanlagen deswegen vor.

Der Verfügbarkeitswert bezieht sich auf die Vergangenheit und gibt das Verhältnis von tatsächlich erzeugter elektrischer Energiemenge zu potentiell erzeugbarer Gesamtmenge an. Die tatsächlich erzeugte Menge an elektrischer Energie ist bekannt, da sie die Grundlage für die Vergütung bildet, die der Betreiber der Windenergieanlage erhält. Der Wert für die potentiell erzeugbare Gesamtmenge ist ebenfalls bekannt, weil in der Windenergieanlage laufend Informationen über die Windverhältnisse aufgezeichnet werden und weil sich aus der Leistungskurve der Windenergieanlage errechnen lässt, wie viel elektrische Energie die Windenergieanlage bei welchen Windgeschwindigkeiten hätte erzeugen müssen, wenn sie ohne Unterbrechung einsatzfähig gewesen wäre. In vielen Fällen wird auch der Verfügbarkeitswert als Verhältnis der beiden Werte ohnehin berechnet, weil auch der Verfügbarkeitswert eine Grundlage für vertragliche Vereinbarungen zwischen dem Hersteller und dem Betreiber der Windenergieanlage bilden kann.

Der Verfügbarkeitswert und die Ausfallwahrscheinlichkeit werden zu einer Reparaturpriorität zusammengeführt, wobei die Reparaturpriorität desto höher ist, je höher die Ausfallwahrscheinlichkeit ist und desto niedriger die Verfügbarkeit in der Vergangenheit war und umgekehrt. Wenn alle aufgenommenen Zustandsdaten sich im vorgesehenen Bereich bewegen, hat die Ausfallwahrscheinlichkeit und damit die Reparaturpriorität einen niedrigen Wert oder den Wert 0. Eine erhöhte Ausfallwahrscheinlichkeit ergibt sich nur dann, wenn bei den Zustandsdaten auffällige Werte festgestellt werden. Vom Begriff Reparatur ist auch das Vorziehen einer regelmäßigen Wartung umfasst. Die Reparaturpriorität kann auf einem Display oder auf ähnliche Weise ausgegeben werden und als Kriterium dienen, in welcher Reihenfolge die Windenergieanlagen repariert werden. Der Wert der Reparaturpriorität kann also Einfluss darauf haben, in welcher Reihenfolge die Reparatur an den Windenergieanlagen vorgenommen wird.

Indem der Verfügbarkeitswert und die Ausfallwahrscheinlichkeit zu einer Reparaturpriorität zusammengeführt werden, wird ein Fortschritt im Hinblick auf den gleichmäßigen Betrieb der Windenergieanlagen erreicht. Während bislang die Windenergieanlagen in der Reihenfolge des Auftretens der Störmeldung repariert wurden, wird bei der Reparaturpriorität nun zusätzlich berücksichtigt, wie die Verfügbarkeit der betreffenden Windenergieanlage in der Vergangenheit war. Eine Windenergieanlage beispielsweise, die eine Verfügbarkeit nahe 100% hat, wird dann unter Umständen trotz des früheren Auftretens eines Fehlers später repariert, als eine benachbarte Windenergieanlage, deren Verfügbarkeit in der Vergangenheit bei lediglich 94% lag. Es wird also ein gleichmäßigerer Betrieb der Windenergieanlagen gefördert. Für die Bestimmung der Reparaturpriorität werden mit dem Verfügbarkeitswert und der Auswahlwahrscheinlichkeit ausschließlich solche Werte herangezogen, die ohnehin verfügbar sind bzw. die auf der Basis vorhandener Daten leicht bestimmt werden können. Die Erfindung kann wie oben erläutert dazu genutzt werden, um bei einem Offshore-Windpark zu erreichen, dass die regelmäßige Wartung bei möglichst vielen Windenergieanlagen gleichzeitig fällig wird. Es ist nicht vorausgesetzt, dass alle Windenergieanlagen, denen im Rahmen des Verfahrens eine Reparaturpriorität zugeordnet wird, zu einem gemeinsamen Windpark gehören müssen. Der Gedanke der Erfindung ist nicht auf Offshore-Windparks beschränkt, sondern er kann ohne weiteres auch bei Windenergieanlagen an Land zur Anwendung kommen.

Der Vergleichswert, von dem ausgehend festgestellt wird, ob die aufgezeichneten Zustandsdaten einem ordnungsgemäßen Betrieb entsprechen, ist im einfachsten Fall ein vorab festgelegter Grenzwert, der beim Betrieb der Windenergieanlage nicht überschritten werden darf. So kann beispielsweise für die Temperatur des Getriebeöls ein Vergleichswert von 120°C vorgegeben sein, bei dessen Überschreiten die Windenergieanlage abgeschaltet werden muss. Größeren Nutzen aus dem Verfahren kann man aber ziehen, wenn als Vergleichswert zusätzlich oder stattdessen ein Durchschnittswert über eine Vielzahl von Windenergieanlagen herangezogen wird. Liegt beispielsweise bei 40 Windenergieanlagen des gleichen Typs, nachdem sie zwei Stunden mit Nennleistung betrieben wurden, die Getriebeöltemperatur zwischen 75°C und 85°C, während bei einer weiteren Windenergieanlage unter den gleichen Bedingungen eine Getriebeöltemperatur von 95°C erreicht wird, so ist zwar bei letzterer Windenergieanlage der Grenzwert von 120°C noch nicht erreicht, es ist aber zu erwarten, dass er früher überschritten wird als bei den anderen Windenergieanlagen. Der Windenergieanlage kann deswegen eine höhere Ausfallwahrscheinlichkeit zugeordnet werden. Insbesondere kann das mehrfache Auftreten einer an sich nicht kritischen Abweichung zwischen Zustandsdaten und Vergleichswerten zum Anlass genommen werden, der Windenergieanlage eine erhöhte Ausfallwahrscheinlichkeit zuzuordnen.

Von der Erfindung umfasst ist es, die Zustandsdaten der Windenergieanlage mit allgemein festgelegten Vergleichswerten zu vergleichen und lediglich bei Auftreten einer Auffälligkeit eine Meldung an eine Überwachungszentrale zu machen. Die Möglichkeiten, Zustandsdaten zu vergleichen und auszuwerten, sind jedoch besser, wenn die Zustandsdaten an eine Überwachungszentrale
übertragen werden. Insbesondere ist es dann möglich, aus den Zustandsdaten neue Vergleichswerte zu gewinnen, die einem ordnungsgemäßen Betrieb der Windenergieanlage entsprechen.

Der Ertrag einer Windenergieanlage liegt deutlich höher, wenn sie an einem Standort mit einer hohen mittleren Windgeschwindigkeit betrieben wird. Der Verlust ist deswegen größer, wenn eine Windenergieanlage an einem Standort mit einer hohen mittleren Windgeschwindigkeit ausfällt, als wenn eine Windenergieanlage an einem Standort mit einer niedrigen mittleren Windgeschwindigkeit ausfällt, da die während eines Ausfalls nicht genutzte Windenergie potentiell größer ist. In die Reparaturpriorität kann deswegen eine zusätzliche Information über die lokalen Windverhältnisse einfließen mit der Tendenz, dass eine Windenergieanlage an einem Standort mit einer hohen mittleren Windgeschwindigkeit eher repariert wird als eine Windenergieanlage an einem Standort mit einer niedrigen mittleren Windgeschwindigkeit. Unter dem gleichen Gesichtspunkt kann in die Reparaturpriorität eine Information über die Nennleistung der Windenergieanlage einfließen, so dass eine Windenergieanlage mit hoher Nennleistung vor einer Windenergieanlage mit niedriger Nennleistung repariert wird.

Erfindungsgemäß wird das Verfahren bei einer Vielzahl von Windenergieanlagen gleichzeitig angewendet. Wenn jeder Windenergieanlage eine Reparaturpriorität zugeordnet ist, kann anhand der Rangfolge eine Liste erstellt werden, wobei sich aus der Reihenfolge der Listeneinträge ergibt, in welcher Reihenfolge die Windenergieanlagen zu reparieren sind. Die Reparaturprioritäten und die Liste werden ständig aktualisiert, wobei sich die Reihenfolge der Listeneinträge laufend ändern kann, wenn sich die Reparaturpriorität einer Windenergieanlage ändert. Parallel können aus den Zustandsdaten Vergleichswerte gewonnen werden, die einem ordnungsgemäßen Betrieb der Windenergieanlage entsprechen. Anhand der Vergleichswerte kann zudem für jede Windenergieanlage leicht der Vergleich zu anderen Windenergieanlagen gezogen werden. Es können Informationen gewonnen werden, wie beispielsweise die, dass innerhalb der gleichen Betriebsdauer nur 5% der Windenergieanlagen des gleichen Typs mehr Störmeldungen abgegeben haben als die betreffende Windenergieanlage. Informationen dieser Art bieten sich für eine grafische Auswertung an.

Einem besonderen Verschleiß sind Windenergieanlagen ausgesetzt, wenn sie übermäßig häufig Startversuche unternehmen. Das Ziel, einen gleichmäßigeren Betrieb von Windenergieanlagen zu erreichen, kann deswegen dadurch gefördert werden, dass in die Reparaturpriorität eine Information einfließt, welche Anzahl von Startversuchen die Windenergieanlage in der Vergangenheit unternommen hat. Dabei führt eine große Anzahl von Startversuchen dazu, dass sich die Reparaturpriorität erhöht und umgekehrt.

Vorzugsweise werden die bei dem Verfahren verwendeten Wert auch dann herangezogen, wenn ein Teil der Windenergieanlagen in einem Windpark abgeschaltet werden muss, beispielsweise aufgrund von Störungen im elektrischen Netz, an das der Windpark angeschlossen ist. So können beispielsweise Windenergieanlagen mit einer hohen Ausfallwahrscheinlichkeit zuerst und Windenergieanlage mit niedriger Verfügbarkeit zuletzt abgeschaltet werden.

Die Erfindung betrifft die eingangs genannte Anordnung zum Durchführen des Verfahrens. Die Anordnung zeichnet sich erfindungsgemäß zunächst dadurch aus, dass der Kalkulator aus dem Verhältnis von tatsächlich erzeugter elektrischer Energiemenge zu potentiell erzeugbarer Gesamtmenge einen auf die Windenergieanlage bezogenen Verfügbarkeitswert ermittelt. Das Rechenmodul ermittelt bei einer von dem Logikmodul festgestellten Abweichung eine Ausfallwahrscheinlichkeit der Windenergieanlage. Das Rechenmodul führt den Verfügbarkeitswert und die Ausfallwahrscheinlichkeit zu einer Reparaturpriorität zusammen. Die Reparaturpriorität wird in der Überwachungszentrale der Windenergieanlage zugeordnet.

Der Begriff Rechenmodul ist hier in einem funktionalen Sinne zu verstehen, es ist nicht erforderlich, dass das Rechenmodul eine bauliche Einheit ist. Zwar ist das Rechenmodul in einer vorteilhaften Ausführungsform bei der Überwachungszentrale angeordnet. Bei anderen Ausführungsformen kann zumindest ein Teil des Rechenmoduls von der Überwachungszentrale getrennt sein und beispielsweise bei der Windenergieanlage angeordnet sein. In einer vorteilhaften Ausführungsform umfasst die Anordnung eine Vielzahl von Windenergieanlagen, wobei die Vielzahl von Windenergieanlagen einer Überwachungszentrale zugeordnet sind. Die Reparaturprioritäten der Windenergieanlagen werden in Überwachungszentrale vorzugsweise nach Rangfolge sortiert, so dass sich eine Reihenfolge ergibt, in der die Windenergieanlagen zu reparieren sind. Die Recheneinheit kann ferner dazu ausgelegt sein, Zustandsdaten einer Vielzahl von Windenergieanlagen heranzuziehen, um Vergleichswerte zu ermitteln, die einem ordnungsgemäßen Betrieb entsprechen.

Die Erfindung wird nachfolgend unter Bezugnahme auf die beigefügten Zeichnungen anhand einer vorteilhaften Ausführungsform beispielhaft beschrieben. Es zeigen:
- Fig. 1: eine schematische Darstellung einer erfindungsgemäßen Anordnung; und
- Fig. 2: eine schematische Darstellung von Elementen der erfindungsgemäßen Anordnung.

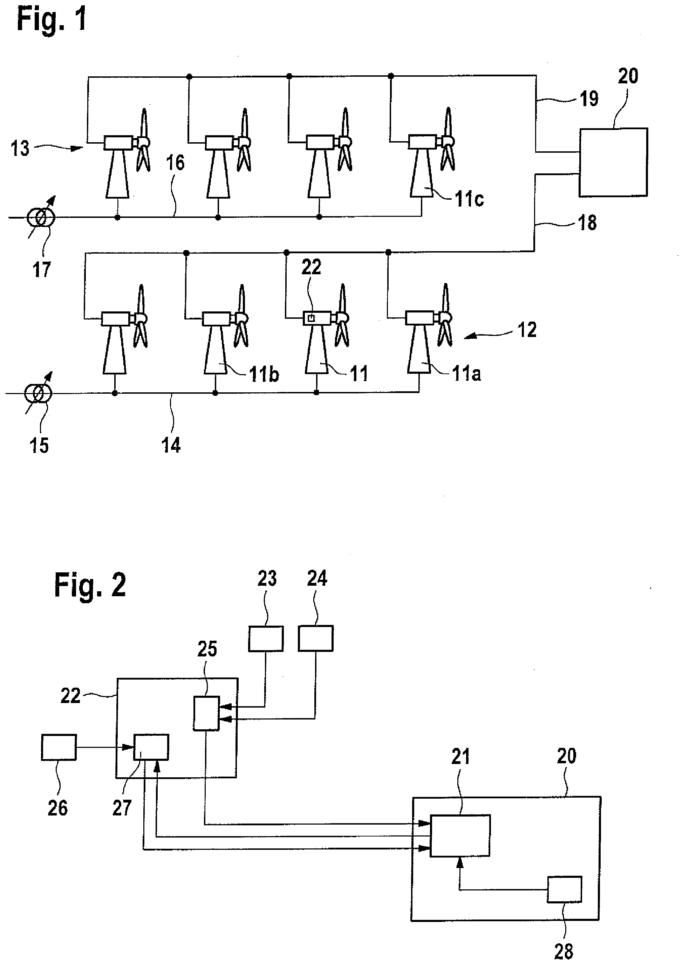

Eine erfindungsgemäße Anordnung in Fig. 1 umfasst eine Mehrzahl von Windenergieanlagen 11, 11a, 11b, 11c, die zu einem ersten Windpark 12 und einem zweiten Windpark 13 zusammengeschlossen sind. In dem Windpark 12 wird die erzeugte elektrische Energie über ein windparkinternes Netz 14 zu einem Übergabepunkt 15 geleitet, an dem die elektrische Energie auf Hochspannung transformiert wird und an das öffentliche Energieverteilungsnetz
übergeben wird. In dem Windpark 13 wird die elektrische Energie entsprechend über ein windparkinternes Netz 16 zu einem Übergabepunkt 17 geleitet. Die Windenergieanlagen 11, 11a, 11b, 11c beider Windparks 12, 13 sind über Datenleitungen 18, 19 mit einer Überwachungszentrale 20 verbunden.

Jede Windenergieanlage umfasst eine Steuerung, wie sie bei der Windenergieanlage 11 mit dem Bzz. 22 angedeutet ist. Die Steuerung 22 ist mit einem Windsensor 23 sowie einem Zähler 24 für die Menge eingespeister elektrischer Energie verbunden. Die Messwerte des Windsensors 23 und des Zählers 24 werden einem Kalkulator 25 zugeführt, der aus den Werten des Windsensors 23 zunächst die potentiell erzeugbare Gesamtmenge ermittelt, also die Menge an elektrischer Energie, die die Windenergieanlage 11 ohne Ausfallzeiten hätte erzeugen können. Der Kalkulator 25 berechnet einen Verfügbarkeitswert für die Windenergieanlage 11, der sich als Quotient aus tatsächlich eingespeister Energiemenge und potentiell erzeugbarer Gesamtmenge ergibt.

Die Steuerung 22 der Windenergieanlage 11 ist ferner mit einer Mehrzahl von Sensoren verbunden, die im Betrieb der Windenergieanlage 11 Zustandsdaten aufnehmen. Beispielhaft ist in Fig. 2 ein Sensor 26 gezeigt, der die Temperatur des Getriebeöls der Windenergieanlage 11 misst. Die mit dem Sensor 26 aufgenommenen Zustandsdaten werden einem Logikmodul 27 zugeführt, das feststellt, ob es Abweichungen zwischen den Zustandsdaten und zugehörigen Vergleichswerten gibt. In dem Logikmodul 27 werden die Zustandsdaten zunächst mit einem absoluten Grenzwert verglichen. Überschreiten die Zustandsdaten einen absoluten Grenzwert, so muss die Windenergieanlage 11 außer Betrieb gesetzt werden. Außerdem vergleicht das Logikmodul 27 die Zustandsdaten mit einem Durchschnittswert, der den durchschnittlichen Zustand von Windenergieanlagen dieses Typs im entsprechenden Betriebszustand wiedergibt. Die Durchschnittswerte werden von der Überwachungszentrale 20 an das Logikmodul 27 übermittelt.

Stellt das Logikmodul 27 eine Abweichung zwischen den Zustandsdaten und den zugehörigen Vergleichswerten fest, so wird eine entsprechende Meldung an ein Rechenmodul 21 der Überwachungszentrale 20 übermittelt. Anhand der Abweichung zwischen den Zustandsdaten der Windenergieanlage 11 und dem Durchschnittswert ermittelt das Rechenmodul 21 eine Ausfallwahrscheinlichkeit der Windenergieanlage 11. Dazu zieht das Rechenmodul 21 zusätzliche Daten aus einem Speicher 28 der Überwachungseinheit 20 heran. Anhand der Daten, die auf Beobachtungen aus der Vergangenheit basieren, lässt sich ermitteln, mit welcher Wahrscheinlichkeit eine Abweichung zwischen den Zustandsdaten der Windenergieanlage und dem Durchschnittswert zu einem Ausfall der Windenergieanlage führen wird. Das Rechenmodul 21 nutzt die Daten aus dem Speicher 28, um eine Ausfallwahrscheinlichkeit der Windenergieanlage 11 zu bestimmen.

Anschließend führt das Rechenmodul 21 die Ausfallwahrscheinlichkeit und den Verfügbarkeitswert, der von dem Kalkulator 25 an das Rechenmodul 21 übermittelt wird, zusammen und bestimmt eine Reparaturpriorität für die Windenergieanlage 11. Die Bestimmung der Reparaturpriorität wird nachfolgend anhand einfacher Beispiele veranschaulicht. Die Reparaturprioritäten aller an dem Verfahren beteiligten Windenergieanlagen werden nach Rangfolge sortiert, so dass sich eine Reihenfolge ergibt, in der die Windenergieanlagen zu reparieren sind.

Bei drei Windenergieanlagen WEA 1, WEA 2, WEA 3, die vom gleichen Bautyp sind, werden Zustandsdaten aufgenommen. Die Zustandsdaten betreffen die Temperatur des Getriebeöls, die Temperatur des Umrichters, die Temperatur des Generators und die Temperatur des Hauptlagers. In jeder Windenergieanlage ist für jede dieser Größen ein Sensor vorgesehen. Es ergeben sich die folgenden Zustandsdaten:

| | Zustandsdaten | | | Vergleichswerte (Grenzwert) |
|---|---|---|---|---|
| | WEA 1 | WEA 2 | WEA 3 | |
| Temp. Getriebeöl | 70°C | 72°C | 75°C | 120°C |
| Temp. Umrichter | 40°C | 45°C | X | 60°C |
| Temp. Generator | 64°C | 60°C | 61°C | 85°C |
| Temp. Hauptlager | X | 65°C | 65°C | 95°C |

Als Vergleichswert für die Zustandsdaten dient ein absoluter Grenzwert, der nicht überschritten werden darf. Die Angabe "X" bei der Temperatur des Hauptlagers von WEA 1 sowie der Temperatur des Umrichters bei WEA 3 zeigt an, dass der Grenzwert überschritten worden ist und dass die Windenergieanlage deswegen außer Betrieb gesetzt werden musste. Die Angaben für WEA 1 und WEA 3 in den übrigen Zeilen sind die betreffenden Werte kurz vor dem Abschalten der Windenergieanlagen. Die WEA 1 und WEA 3 sind bereits abgeschaltet und haben damit eine Ausfallwahrscheinlichkeit von 100%. Bei WEA 2 liegen alle als Zustandsdaten aufgenommenen Werte deutlich unterhalb der zugehörigen Grenzwerte, die Ausfallwahrscheinlichkeit beträgt 0%. Eine weitere Differenzierung der Ausfallwahrscheinlichkeit zwischen 0% und 100% wird in diesem Beispiel nicht getroffen.

Außerdem umfasst jede Windenergieanlage ein Logikmodul, das aus dem Verhältnis von tatsächlich erzeugter elektrischer Energiemenge zu potentiell erzeugbarer Gesamtmenge eine relative Verfügbarkeit bestimmt, die in einem Verfügbarkeitswert wiedergegeben ist. Die entsprechenden Werte finden sich in der folgenden Tabelle:

| | Windenergieanlage 1 | WEA 2 | WEA 3 |
|---|---|---|---|
| Ausfallwahrscheinlichkeit | 100% | 0% | 100% |
| Verfügbarkeitswert | 99% | 97% | 92% |
| Reparaturpriorität | 1, 01 | 0 | 1,09 |

Die in den Windenergieanlagen bestimmten Verfügbarkeitswerte und Ausfallwahrscheinlichkeiten werden zu der Überwachungszentrale übermittelt. In der Überwachungszentrale wird für jede Windenergieanlage eine Reparaturpriorität errechnet, indem der Quotient aus Ausfallwahrscheinlichkeit und Verfügbarkeitswert gebildet wird. Die WEA 1 hat eine Reparaturpriorität von 1,01, die WEA 2 von 0 und die WEA 3 von 1,09. Da sowohl die WEA 1 als auch die WEA 3 eine Ausfallwahrscheinlichkeit von 100% haben, hängt die Reparaturpriorität hier alleine vom Verfügbarkeitswert ab. Aus der höheren Reparaturpriorität kann abgeleitet werden, dass die WEA 3 vor der WEA 1 zu reparieren ist. Da bei WEA 2 keine Anzeichen eines Schadens ersichtlich sind, hat die Reparaturpriorität den Wert 0, es sind keine Reparaturen erforderlich.

Im folgenden Beispiel werden die Zustandsdaten zusätzlich zu den absoluten Grenzwerten mit Durchschnittswerten verglichen. Die Durchschnittswerte ergeben sich aus Messungen und Beobachtungen, die in der Vergangenheit an Windenergieanlagen dieses Typs durchgeführt wurden. Die Werte in der rechten Spalte geben die Werte an, die im Dauerbetrieb mit Nennleistung gemessen wurden. Alternativ können dort Durchschnittswerte für andere Betriebszustände der Windenergieanlagen angegeben sein, es muss lediglich sichergestellt sein, dass die Zustandsdaten der Windenergieanlagen zu den Vergleichswerten passen.

| | Zustandsdaten | | | Vergleichswerte |
|---|---|---|---|---|
| | WEA 1 | WEA 2 | WEA 3 | Durchschnitt |
| Temp. Getriebeöl | 70°C | 71°C | 92°C | 70°C |
| Temp. Umrichter | 40°C | 45°C | 42°C | 41°C |
| Temp. Generator | 64°C | 60°C | 61°C | 65°C |
| Temp. Hauptlager | X | 65°C | 65°C | 65°C |
| Verfügbarkeitswert | 99% | 97% | 92% | |

Wie im obigen Beispiel ist die WEA 1 bereits außer Betrieb gesetzt, weil der absolute Grenzwert für die Temperatur des Hauptlagers überschritten wurde. Die WEA 2 und WEA 3 sind in Betrieb, wobei bei der WEA 2 in den Zustandsdaten keine Auffälligkeiten gegenüber den Durchschnittswert bestehen. Bei der WEA 3 hingegen wird eine Temperatur des Getriebeöls von 92°C gemessen, obwohl Windenergieanlagen dieses Typs in einem entsprechenden Betriebszustand durchschnittlich eine Getriebeöltemperatur von lediglich 70°C haben. Mit einer Getriebeöltemperatur von 92°C ist noch keine absolute Grenze überschritten, die WEA 3 kann also in Betrieb bleiben. Allerdings deutet die erhöhte Getriebeöltemperatur auf einen Fehler hin, der in absehbarer Zeit zu einem Ausfall der Windenergieanlage führen kann. Unter Zugrundelegung früherer Beobachtungen wird der WEA 3 deswegen ein Wert für die Ausfallwahrscheinlichkeit zugeordnet. Die Ausfallwahrscheinlichkeit beträgt in diesem Beispiel 70%:

| | Windenergieanlage 1 | WEA 2 | WEA 3 |
|---|---|---|---|
| Ausfallwahrscheinlichkeit | 100% | 0% | 70% |
| Verfügbarkeitswert | 98% | 97% | 92% |
| Reparaturpriorität | 1,02 | 0 | 0,76 |

Wiederum wird in der Überwachungszentrale aus der Ausfallwahrscheinlichkeit und dem Verfügbarkeitswert eine Reparaturpriorität ermittelt. Berechnet man die Reparaturpriorität als Quotient aus Ausfallwahrscheinlichkeit und Verfügbarkeitswert, so ergibt sich für die WEA 1 eine Reparaturpriorität von 1,01 und für die WEA 3 eine Reparaturpriorität von 0,76. Die WEA 1 wird also vor der WEA 3 repariert.

Bei dieser Art der Berechnung der Reparaturpriorität werden in aller Regel zunächst die Windenergieanlagen repariert, die eine Ausfallwahrscheinlichkeit von 100% haben, die also bereits ausgefallen sind. In manchen Fällen ist es gewünscht, dem Verfügbarkeitswert ein größeres Gewicht im Vergleich zur Ausfallwahrscheinlichkeit zu geben. Dies kann beispielsweise erreicht werden, indem der Reparaturpriorität ein Faktor zugeordnet wird. Würde man beispielsweise einem Verfügbarkeitswert zwischen 100% und 98% den Faktor 1 zuordnen, einem Verfügbarkeitswert zwischen 97% und 95% den Faktor 2 und einem Verfügbarkeitswert zwischen 94% und 92% den Faktor 3, so würde man zu folgenden Ergebnissen kommen, wenn man die Reparaturpriorität als Produkt aus Ausfallwahrscheinlichkeit und dem Faktor berechnet:

| | WEA 1 | WEA 2 | WEA 3 |
|---|---|---|---|
| Ausfallwahrscheinlichkeit | 100% | 0% | 70% |
| Verfügbarkeitswert | 98% | 97% | 92% |
| Reparaturpriorität | 200 | 0 | 210 |

Die WEA 3 würde bei dieser Art der Berechnung also vor der WEA 1 repariert werden. Es wird dadurch erreicht, dass sich der Verfügbarkeitswert der WEA 3 an den Verfügbarkeitswert der WEA 1 annähert und dass die Windenergieanlagen insgesamt gleichmäßiger betrieben werden.

## Patentansprüche

1. Anordnung aus einer Mehrzahl von Windenergieanlagen (11, 11a, 11b, 11c), einer Überwachungszentrale (20), einem Rechenmodul (21), einem Logikmodul (27) und einem Kalkulator (25), wobei die Windenergieanlagen einen Sensor (26) zum Aufnehmen von Zustandsdaten der Windenergieanlagen (11, 11a, 11b, 11c) aufweisen und wobei das Logikmodul (27) zum Ermitteln von Abweichungen zwischen den Zustandsdaten und einem zugehörigen Vergleichswert ausgelegt ist, **dadurch gekennzeichnet, dass** der Kalkulator (25) dazu ausgebildet ist, aus dem Verhältnis von tatsächlich erzeugter elektrischer Energiemenge zu potentiell erzeugbarer Gesamtmenge einen auf die Windenergieanlagen bezogenen Verfügbarkeitswert zu ermitteln, dass das Rechenmodul (21) dazu ausgebildet ist, bei einer von dem Logikmodul (27) festgestellten Abweichung eine Ausfallwahrscheinlichkeit der Windenergieanlagen (11, 11a, 11b, 11c) zu ermitteln, dass das Rechenmodul (21) dazu ausgebildet ist, den Verfügbarkeitswert und die Ausfallwahrscheinlichkeit zu einer Reparaturpriorität zusammenzuführen und dass die Überwachungszentrale (20) dazu ausgebildet ist, die Reparaturpriorität zu den Windenergieanlagen (11, 11a, 11b, 11c) zuzuordnen.

2. Anordnung nach Anspruch 1, **dadurch gekennzeichnet, dass** das Rechenmodul (21) dazu ausgelegt ist, der Ausfallwahrscheinlichkeit einen zwischen 0% und 100% liegenden Wert zuzuordnen.

3. Anordnung nach Anspruch 1 oder 2, **dadurch gekennzeichnet, dass** die Reparaturpriorität desto höher ist, je höher die Ausfallwahrscheinlichkeit ist und desto niedriger die Verfügbarkeit in der Vergangenheit war und umgekehrt.

4. Anordnung nach einem der Ansprüche 1 bis 3, **dadurch gekennzeichnet, dass** in die Reparaturpriorität eine Information über die lokalen Windverhältnisse einfließt, so dass eine Windenergieanlage (11, 11a, 11b, 11c) an einem Standort mit einer hohen mittleren Windgeschwindigkeit eher repariert wird als eine Windenergieanlage (11, 11a, 11b, 11c) an einem Standort mit einer niedrigen mittleren Windgeschwindigkeit.

5. Anordnung nach einem der Ansprüche 1 bis 4, **dadurch gekennzeichnet, dass** in die Reparaturpriorität eine Information über die Nennleistung der Windenergieanlagen (11, 11a, 11b, 11c) einfließt, so dass eine Windenergieanlage (11, 11a, 11b, 11c) mit hoher Nennleistung vor einer Windenergieanlage (11, 11a, 11b, 11c) mit niedriger Nennleistung repariert wird.

6. Anordnung nach einem der Ansprüche 1 bis 5, **dadurch gekennzeichnet, dass** in die Reparaturpriorität eine Information einfließt, welche Anzahl von Startversuchen die Windenergieanlagen (11, 11a, 11b, 11c) in der Vergangenheit unternommen haben, so dass die Reparaturpriorität sich bei einer großen Anzahl von Startversuchen erhöht und umgekehrt.

7. Anordnung nach einem der Ansprüche 1 bis 6, **dadurch gekennzeichnet, dass** die Anordnung eine Vielzahl von Windenergieanlagen (11, 11a, 11b, 11c) umfasst und dass die Überwachungszentrale (20) die Reparaturprioritäten der Windenergieanlagen (11, 11a, 11b, 11c) nach Rangfolge sortiert.

8. Anordnung nach einem der Ansprüche 1 bis 7, **dadurch gekennzeichnet, dass** die Recheneinheit (21) bei der Überwachungszentrale (20) angeordnet ist.

9. Anordnung nach einem der Ansprüche 1 bis 8, **dadurch gekennzeichnet, dass** der Vergleichswert ein vorab festgelegter Grenzwert ist.

10. Anordnung nach einem der Ansprüche 1 bis 8, **dadurch gekennzeichnet, dass** die Recheneinheit (21) Zustandsdaten einer Vielzahl von Windenergieanlagen (11, 11a, 11b, 11c) heranzieht, um Vergleichswerte zu ermitteln, die einem ordnungsgemäßen Betrieb entsprechen.

11. Anordnung nach einem der Ansprüche 1 bis 10, **dadurch gekennzeichnet, dass** im Fall, dass ein Teil der Windenergieanlagen (11, 11a, 11b, 11c) eines Windparks abgeschaltet werden muss, Windenergieanlagen (11, 11a, 11b, 11c) mit hoher Ausfallwahrscheinlichkeit zuerst und Windenergieanlagen (11, 11a, 11b, 11c) mit niedriger Verfügbarkeit zuletzt abgeschaltet werden.

## Claims

1. Arrangement comprising a plurality of wind energy installations (11, 11a, 11b, 11c), a monitoring centre (20), a computation module (21), a logic module (27) and a calculator (25), wherein the wind energy installations have a sensor (26) for recording state data of the wind energy installations (11, 11a, 11b, 11c) and wherein the logic module (27) is designed to determine discrepancies between the state data and an associated comparison value, **characterized in that** the calculator (25) is designed to determine an availability value related to the wind energy installations from the ratio of the actually produced amount of electrical energy to the potentially producible total amount, **in that** the computation module (21) is designed to determine a failure probability of the wind energy installations (11, 11a, 11b, 11c) when the logic module (27) finds a discrepancy, **in that** the computation module (21) is designed to combine the availability value and the failure probability to form a repair priority, and **in that** the monitoring centre (20) is designed to associate the repair priority with the wind energy installations (11, 11a, 11b, 11c).

2. Arrangement according to Claim 1, **characterized in that** the computation module (21) is designed to associate a value of between 0% and 100% with the failure probability.

3. Arrangement according to Claim 1 or 2, **characterized in that** the repair priority is higher the higher the failure probability and the lower the availability in the past, and vice versa.

4. Arrangement according to one of Claims 1 to 3, **characterized in that** information about the local wind conditions is included in the repair priority, so that a wind energy installation (11, 11a, 11b, 11c) at a site having a high average wind speed is repaired sooner than a wind energy installation (11, 11a, 11b, 11c) at a site having a low average wind speed.

5. Arrangement according to one of Claims 1 to 4, **characterized in that** information about the rated power of the wind energy installation (11, 11a, 11b, 11c) is included in the repair priority, so that a wind energy installation (11, 11a, 11b, 11c) having a high rated power is repaired before a wind energy installation (11, 11a, 11b, 11c) having a low rated power.

6. Arrangement according to one of Claims 1 to 5, **characterized in that** information regarding the number of starting attempts the wind energy installations (11, 11a, 11b, 11c) have made in the past is included in the repair priority, so that the repair priority increases for a large number of starting attempts, and vice versa.

7. Arrangement according to one of Claims 1 to 6, **characterized in that** the arrangement comprises a multiplicity of wind energy installations (11, 11a, 11b, 11c) and **in that** the monitoring centre (20) sorts the repair priorities of the wind energy installations (11, 11a, 11b, 11c) according to order of standing.

8. Arrangement according to one of Claims 1 to 7, **characterized in that** the computation unit (21) is arranged at the monitoring centre (20).

9. Arrangement according to one of Claims 1 to 8, **characterized in that** the comparison value is a previously stipulated limit value.

10. Arrangement according to one of Claims 1 to 8, **characterized in that** the computation unit (21) uses state data of a multiplicity of wind energy installations (11, 11a, 11b, 11c) to determine comparison values that are based on correct operation.

11. Arrangement according to one of Claims 1 to 10, **characterized in that** if some of the wind energy installations (11, 11a, 11b, 11c) of a wind farm need to be shut down, wind energy installations (11, 11a, 11b, 11c) having a high failure probability are shut down first and wind energy installations (11, 11a, 11b, 11c) having a low availability are shut down last.

## Revendications

1. Ensemble formé d'une pluralité d'éoliennes (11, 11a, 11b, 11c), d'un centre de surveillance (20), d'un module informatique (21), d'un module logique (27) et d'un calculateur (25), les éoliennes comportant un capteur (26) destiné à acquérir des données d'état des éoliennes (11, 11a, 11b, 11c) et le module logique (27) étant conçu pour déterminer des écarts entre les données d'état et une valeur de comparaison associée, **caractérisé en ce que** le calculateur (25) est conçu pour déterminer une valeur de disponibilité relative aux éoliennes à partir du rapport de la quantité d'énergie électrique réellement générée à la quantité totale pouvant potentiellement être générée, **en ce que** le module informatique (21) est conçu pour déterminer une probabilité de défaillance des éoliennes (11, 11a, 11b, 11c) en cas d'écart déterminé par le module logique (27), **en ce que** le module informatique (21) est conçu pour combiner la valeur de disponibilité et la probabilité de défaillance pour obtenir une priorité de réparation et **en ce que** le centre de surveillance (20) est conçu pour associer la priorité de réparation aux éoliennes (11, 11a, 11b, 11c).

2. Ensemble selon la revendication 1, caractérisé en que le module informatique (21) est conçu pour associer une valeur comprise entre 0 % et 100 % à la probabilité de défaillance.

3. Ensemble selon la revendication 1 ou 2, **caractérisé en ce que** la priorité de réparation est d'autant plus élevée que la probabilité de défaillance est élevée et que la disponibilité dans le passé était plus faible et vice versa.

4. Ensemble selon l'une des revendications 1 à 3, **caractérisé en ce que** la priorité de réparation comprend une information sur les conditions de vent locales de façon à réparer une éolienne (11, 11a, 11b, 11c) située à un endroit où la vitesse moyenne du vent est élevée plutôt qu'une éolienne (11, 11a, 11b, 11c) située à un endroit où la vitesse moyenne du vent est faible.

5. Ensemble selon l'une des revendications 1 à 4, **caractérisé en ce que** la priorité de réparation comprend une information sur la puissance nominale des éoliennes (11, 11a, 11b, 11c) de façon à réparer une éolienne (11, 11a, 11b, 11c) ayant une puissance nominale élevée avant une éolienne (11, 11a, 11b, 11c) ayant une faible puissance nominale.

6. Ensemble selon l'une des revendications 1 à 5, **caractérisé en ce que** la priorité de réparation comprend une information sur le nombre de tentatives de démarrage que les éoliennes (11, 11a, 11b, 11c) ont effectuées dans le passé, de sorte que la priorité de réparation est d'autant plus élevée que le grand nombre de tentatives de démarrage est élevé et vice versa.

7. Ensemble selon l'une des revendications 1 à 6, **caractérisé en ce que** l'ensemble comprend une multitude d'éoliennes (11, 11a, 11b, 11c) et **en ce que** le centre de surveillance (20) trie les priorités de réparation des éoliennes (11, 11a, 11b, 11c) de façon ordonnée.

8. Ensemble selon l'une des revendications 1 à 7, **caractérisé en ce que** l'unité informatique (21) est disposée au centre de surveillance (20).

9. Ensemble selon l'une des revendications 1 à 8, **caractérisé en ce que** la valeur de comparaison est une limite prédéterminée.

10. Ensemble selon l'une des revendications 1 à 8, **caractérisé en ce que** l'unité informatique (21) utilise des données d'état d'un grand nombre d'éoliennes (11, 11a, 11b, 11c) pour déterminer des valeurs de comparaison qui correspondent à un bon fonctionnement.

11. Ensemble selon l'une des revendications 1 à 10, **caractérisé en ce que**, dans le cas où une partie des éoliennes (11, 11a, 11b, 11c) d'un parc éolien doit être désactivée, les éoliennes (11, 11a, 11b, 11c) ayant une probabilité de défaillance élevée sont désactivées en premier et les éoliennes (11, 11a, 11b, 11c) ayant une faible disponibilité sont désactivées en dernier.
